# EUROPEAN PATENT APPLICATION

(11) **EP 4 692 388 A1**
(43) Date of publication of application: **11.02.2026**
(21) Application number: 24784174.5
(22) Date of filing: 29.03.2024
(51) Int. Cl.: C22C 9/04, C22F 1/08, C22C 1/02, C22C 1/06

(54) **COPPER ALLOY AND PREPARATION METHOD THEREFOR**

(30) Priority: 03.04.2023 CN 202310340478
(71) Applicant: KMD Precise Copper Strip (Henan) Co., Ltd, Xinxiang, Henan 453000 (CN); Tyco Electronics (Shanghai) Co., Ltd., Shanghai 200131 (CN); TE Connectivity Solutions GmbH, 8200 Schaffhausen (CH)
(72) Inventor: LU, Changjian, Xinxiang, Henan 453000 (CN); GAN, Tony, Xinxiang, Henan 453000 (CN); LIU, Aikui, Xinxiang, Henan 453000 (CN); MENG, Fanjian, Xinxiang, Henan 453000 (CN); SUN, Xinchun, Xinxiang, Henan 453000 (CN); OSTERMANN, Ruediger, 8200 Schaffhausen (CH); ZHANG, Ying, Xinxiang, Henan 453000 (CN); LIU, Zhaoyang, Xinxiang, Henan 453000 (CN); ZHANG, Weidong, Xinxiang, Henan 453000 (CN); LV, Gang, Xinxiang, Henan 453000 (CN); LIU, Dong, Xinxiang, Henan 453000 (CN)
(74) Representative: Gille Hrabal Partnerschaftsgesellschaft mbB Patentanwälte
(86) International application number: PCT/CN2024/084645
(87) International publication number: WO 2024/208089

(57) **Abstract**

Disclosed in the present invention are a copper alloy and a preparation method therefor. The copper alloy comprises the following components in percentages by weight: Cu: 85-92 wt.%, Ni: 0.5-1.5 wt.%, Si: 0.2-0.8 wt.%, Sn: 0.05-0.15 wt.%, Cr: 0.1-0.8 wt.%, Zr: 0.01-0.5 wt.%, Mg: 0.01-0.3 wt.% and the balance of Zn. In a Cu-Zn-Sn alloy system, elements such as Ni, Si, Cr and Zr are added thereto in the present invention, such that the aim of composite precipitation strengthening is achieved. In addition, the present invention controls the precipitation sequence and the precipitation phase size of Ni, Cr, Zr and Si by utilizing the composite precipitation strengthening, such that the material obtains good bending characteristics and stress relaxation resistance.

## Description

### Field of the Invention

The present invention relates to the technical field of copper alloys, in particular to the technical field of high stress relaxation resistance copper alloys.

### Background of the Invention

Copper alloys used in connectors, terminals, relays, etc. are required to have good electrical conductivity, yield strength, and stress relaxation resistance to ensure compliance with current or signal conduction requirements and long-term reliability.

The copper alloys currently used in the market are mainly solid solution-strengthened types represented by bronze or brass and precipitation-strengthened types represented by CuNiSi. The bronze can achieve a good strength level due to the effect of Sn element, but cannot achieve a high electrical conductivity, generally below 20% IACS. At the same time, due to the high price of Sn metal, the price of bronze materials has always been at a high level. CuNiSi material can obtain better comprehensive performance through precipitation strengthening with Ni and Si elements. However, due to the cost of the metals, the overall cost is relatively high.

Japanese patents No. H5-33087 and No. 2006-283060 design and develop a method for adding Ni, Fe, and P elements to the Cu-Zn-Sn alloy system for the convenience of recycling, and achieve the purpose of improving the performance of the Cu-Zn-Sn alloy through the Ni-P and Fe-P precipitation strengthening mechanism. However, the precipitation strengthening effect is not obvious and satisfactory comprehensive performance cannot be obtained. Japanese patents No. 3953357 and No. 3717321 improve the stress relaxation resistance of the material through adding Ni element to the Cu-Zn-Sn alloy system to generate NiSn intermetallic compounds or through finely controlling the ratio of (Fe+Ni)/P. However, since only the ratio of Ni/Sn is considered without considering the interaction among Ni, Sn and P elements, the goal of good stress relaxation resistance cannot be fully achieved.

US patent US9653191B2 proposes the addition of Fe, Co, and P elements to the Cu-Zn-Sn system in order to obtain a material with good bending performance and stress relaxation resistance. However, due to the price of Co element, this alloy system cannot achieve low-cost advantage. Chinese patent CN105112715B obtains alloy materials with better cost advantages and performance through adding Ni and Si elements to the Cu-Zn system. However, due to the high content of Zn (10-20%) in the alloy system, the alloy system is highly likely to experience issues such as stress corrosion and low electrical conductivity.

### Summary of the Invention

The purpose of the present invention is to provide a copper alloy and a preparation method therefor in order to improve the deficiencies in the prior art.

The technical solution adopted by the present invention is: a copper alloy, which comprises the following components in percentages by weight: Cu: 85-92 wt.%, Ni: 0.5-1.5 wt.%, Si: 0.2-0.8 wt.%, Sn: 0.05-0.15 wt.%, Cr: 0.1-0.8 wt.%, Zr: 0.01-0.5 wt.%, Mg: 0.01-0.3 wt.% and the balance of Zn and inevitable impurities; and the copper alloy comprises NiSi phase and Cr3Si phase, wherein a size of the NiSi phase is ≤30nm, and a size of the Cr3Si phase is 40-100nm.

According to the copper alloy provided by the present invention, the NiSi phase and the copper alloy matrix are in a coherent relationship.

According to the copper alloy provided by the present invention, the components in percentages by weight of the copper alloy also comprises at least one element of Co, Fe, P, Re and Mn with a total amount not exceeding 2.0wt.%, wherein Co: 0.01%-1.0wt.%, Fe: 0.01%-1.0wt.%, P: 0.001%-0.05wt.%, Re: 0.0001%-0.05wt.%.

According to the copper alloy provided by the present invention, a strip made of the copper alloy has a yield strength of ≥550 MPa, an electrical conductivity of ≥35% IACS%, and a stress relaxation rate of no more than 25% after being kept at 150° C for 1000 hours.

According to the copper alloy provided by the present invention, a 90° bending workability of the strip made of the copper alloy is as follows: a value of R/t≤1 in the GW direction, and a value of R/t≤1 in the BW direction; and a 180° bending workability of the strip made of the copper alloy is as follows: a value of R/t≤2 in the GW direction, and a value of R/t≤2 in the BW direction.

According to the copper alloy provided by the present invention, the size of the NiSi phase is ≤10 nm.

According to the copper alloy provided by the present invention, the copper alloy is configured to manufacture a terminal of a connector.

A method for preparing the copper alloy according to the present invention comprises the following steps:
(1) Melting and Casting: maintaining melting temperature at 1200-1280°C, and casting temperature at 1180-1250°C;
(2) Preheating: preheating at 800-1050°C for 6-10h so as to make an ingot fully homogenized;
(3) Hot Rolling: controlling rolling reduction rate to be above 85%, while maintaining plate temperature above 800°C during the rolling process, in order to minimize a precipitation of phase particles such as Ni, Si, Cr, etc., during hot rolling process;
(4) Water Quenching: performing rapid inline water quenching with hot-rolled plate temperature above 800°C, cooling water temperature at 30-45°C, an inline water quenching speed of 30-50m/min, and a temperature difference between a head and tail of the plate before water quenching not exceeding 40°C, so as to facilitate subsequent aging and solution treatment, while ensuring the uniformity of the coil performance in a finished product;
(5) Milling Surface: milling 0.5-1.2mm from both top and bottom surfaces of the hot-rolled plate;
(6) Primary Cold Rolling: controlling the total reduction rate in cold rolling to be above 80% so as to facilitate subsequent aging;
(7) Primary Aging: maintaining aging temperature at 350-480°C for 6-15 hours so as to precipitate Cr₃Si phase with a size of 40-100 nm and allow the Cr₃Si phase inhibit grain growth during the solution heat treatment process;
(8) Inline Solution Treatment: maintaining inline solution temperature at 800-950°C, and an inline solution speed of 10-60m/min so as to ensure that the precipitated phases during the hot rolling and water quenching processes are fully dissolved into a copper matrix;
(9) Secondary Cold Rolling: controlling the total reduction rate in cold rolling at 30-70%; and
(10) Secondary Aging: maintaining aging temperature at 400-550°C for 6-15 hours so as to precipitate NiSi phase with a size of ≤30 nm that is coherently aligned with the copper alloy matrix.

According to a method for preparing a copper alloy provided by the present invention, the melting and casting method in step (1) is vertical casting or horizontal continuous casting, wherein the horizontal continuous casting adopts a hot-cold combination molding (HCCM) horizontal continuous casting process.

According to a method for preparing a copper alloy provided by the present invention, Cr3Si phase is precipitated after the primary aging, and NiSi phase is precipitated after the secondary aging.

Compared with the prior art, the present invention has the following advantages:
1. In a Cu-Zn-Sn alloy system, elements such as Ni, Si, Cr and Zr are added thereto, such that the aim of composite precipitation strengthening is achieved. On the one hand, the solid solution strengthening effect of Zn or Sn elements is maintained; and on the other hand, through the composite precipitation strengthening of Ni, Si, Cr and Zr, the strength and stress relaxation resistance are maximized with minimal impact on electrical conductivity.
2. Since the present invention controls the precipitation sequence and the precipitation phase size of Ni, Cr, Zr and Si by utilizing the composite precipitation strengthening, good bending performance and stress relaxation resistance can be obtained.
3. The alloy system of the present invention has a cost advantage over the conventional bronze and CuNiSi systems due to the high content of elements such as Zn.
4. Through controlling the size of the precipitated phase, the size of NiSi phase is maintained at ≤30nm, and the size of Cr3Si phase is between 40-100nm, thereby enhancing the precipitation strengthening effect and further improving the strength of the alloy.
5. Co, Fe, P, Re and Mn elements are added to the copper alloy, wherein Mg, Co and Fe can refine the grains and promote the precipitation of smaller and denser NiSi phases, P and Re can purify the melt and refine the grains during the smelting process, thereby improving the strength and electrical conductivity of the alloy.

### Brief Description of the Drawings

Fig. 1 is a scanning electron microscope image of a copper alloy in the embodiment 1;
Fig. 2 is a Ni element distribution diagram of a copper alloy in the embodiment 1;
Fig. 3 is a Si element distribution diagram of a copper alloy in the embodiment 1;
Fig. 4 is a Cr element distribution diagram of a copper alloy in the embodiment 1;
Fig. 5 is a transmission electron microscope image of a copper alloy in the embodiment 1.

### Detailed Description of the Embodiments

In order for those skilled in the art to better understand the technical solution provided by the present invention, the following is a detailed description in conjunction with specific embodiments.

The present invention adds Ni, Si and Cr elements to the copper alloy material. During the aging process, Ni and Si elements form a NiSi metal compound phase, and Cr and Si elements form a Cr3Si phase. The NiSi phase in the alloy mainly plays a role in improving strength and electrical conductivity. After the alloy solid solution treatment, the NiSi phase completely dissolves into the copper matrix to form a supersaturated solid solution. During the subsequent aging process, under the combined action of the aging temperature and the cold rolling distortion energy storage, the Ni and Si solute elements in the matrix are precipitated from the solute-enriched area in the form of NiSi metal compounds and are dispersed in the matrix. The NiSi phase inhibits the movement of dislocations and grain boundaries, thereby improving the strength of the alloy. On the other hand, the precipitation of the NiSi phase purifies the matrix, reduces the distortion of the copper phase lattice, weakens the scattering of moving electrons, and greatly improves the electrical conductivity of the alloy. A small amount of Cr3Si phase is produced during the alloy casting crystallization process, and fine dispersed Cr3Si phase (40nm≤size≤100nm) is precipitated from the matrix during the subsequent primary aging process.

The Cr3Si phase can increase the recrystallization temperature and high temperature softening resistance of the alloy. During the solution treatment, the dispersed Cr3Si phase can inhibit the growth of grains and refine the grains. At the same time, as the primary phase, the fine dispersed Cr3Si phase can serve as the nucleation for precipitation center of the NiSi phase during the secondary aging process of the alloy, promoting the precipitation of the NiSi phase and refining the size of the NiSi phase, as well as making the NiSi phase more firmly bonded to the copper matrix and presenting a coherent relationship with the matrix. Under the effects of precipitation strengthening, dislocation strengthening and grain refinement of Cr3Si and NiSi phases, the strength of the alloy is greatly improved. The more uniform and dense the distribution of NiSi and Cr3Si phases is, the better the precipitation strengthening effect is and the greater the increase in strength is. The size of Cr3Si phase affects the size and distribution of NiSi phase during the subsequent secondary aging. The coarser the Cr3Si phase (size ≥ 100nm), the more uneven the distribution and the less dense it is; the larger the size of NiSi phase, the more uneven the distribution and the less dense it is; and the finer the Cr3Si phase (size ≤ 40nm), the less favorable it is for the precipitation of the NiSi phase, thereby weakening the precipitation strengthening effect and reducing the strength of the alloy. At the same time, if the size of the NiSi phase is too large, it will weaken the precipitation strengthening effect and reduce the strength of the alloy.

Mg, Co and Fe can refine the grains and promote the precipitation of smaller and denser NiSi phases, P and Re can purify the melt and refine the grains during the smelting process, thereby improving the strength and electrical conductivity of the alloy.

The copper alloys shown in the compositions of the embodiments and comparative embodiments 1 and 2 in Table 1 are prepared and samples are prepared according to the following steps:
(1) adopting vertical semi-continuous casting to cast an ingot with a specification of 720*220 mm and a casting temperature of 1190°C;
(2) Preheating: heating to a temperature of 930°C and holding for 8 hours;
(3) Hot Rolling: performing hot rolling from 220 mm to 18 mm;
(4) Water Quenching: performing inline water quenching when the plate temperature reaches 850°C, with a cooling water temperature of 38°C and a quenching speed of 40 m/min;
(5) Milling Surface: milling 0.6 mm from both top and bottom surfaces, and reducing the thickness to 16.2 mm;
(6) Primary Cold Rolling: performing cold rolling from 16.2mm to 0.4mm;
(7) Primary Aging Temperature: maintaining aging temperature at 400°C and holding for 5 hours;
(8) Inline Solution Treatment: maintaining solution temperature at 830°C, and a solution speed of 35m/min;
(9) Secondary Cold Rolling: performing cold rolling from 0.4 mm to 0.2 mm; and
(10) Secondary Aging Temperature: maintaining aging temperature at 420°C and holding for 8 hours.

**Table 1 Alloy Compositions of Embodiments and Comparative Embodiments**

| Serial Number | Element Content/wt% | | | | | | | | |
|---|---|---|---|---|---|---|---|---|---|
| | Cu | Ni | Si | Sn | Cr | Zr | Mg | Zn | Other |
| Embodiment 1 | 89.06 | 0.95 | 0.40 | 0.11 | 0.29 | 0.09 | 0.10 | 9.00 | |
| Embodiment 2 | 87.56 | 1.23 | 0.53 | 0.09 | 0.32 | 0.12 | 0.15 | 10.00 | |
| Embodiment 3 | 85.40 | 1.07 | 0.47 | 0.14 | 0.53 | 0.13 | 0.17 | 12.09 | |
| Embodiment 4 | 90.32 | 1.32 | 0.23 | 0.06 | 0.38 | 0.23 | 0.23 | 7.23 | 0.013Re |
| Embodiment 5 | 88.32 | 1.49 | 0.57 | 0.45 | 0.55 | 0.35 | 0.15 | 8.02 | |
| Embodiment 6 | 91.32 | 1.44 | 0.53 | 0.07 | 0.17 | 0.42 | 0.21 | 5.84 | 0.015Fe |
| Embodiment 7 | 90.54 | 1.16 | 0.32 | 0.06 | 0.24 | 0.05 | 0.06 | 7.57 | 0.02P |
| Comparative Embodiment 1 | 84.30 | 0.43 | 0.25 | 0.06 | 0.63 | 0.03 | 0.12 | 14.38 | |
| Comparative Embodiment 2 | 86.43 | 1.21 | 0.23 | 0.09 | 0.06 | 0.03 | 0.05 | 11.89 | |
| Comparative Embodiment 3 | Balance | | | 6.01 | | | | | 0.10P |
| Comparative Embodiment 4 | Balance | | | | | | | 30 | |

The comparative embodiment 3 is C51900 tin-phosphorus bronze, and the comparative embodiment 4 is C26000 brass.

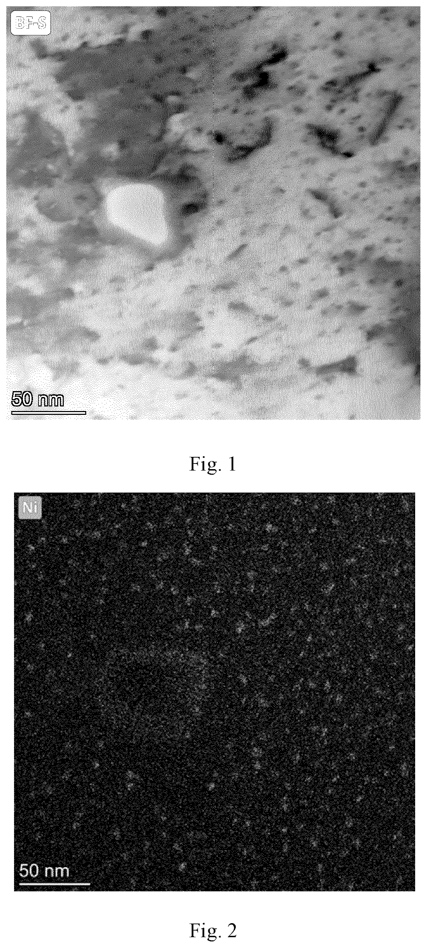

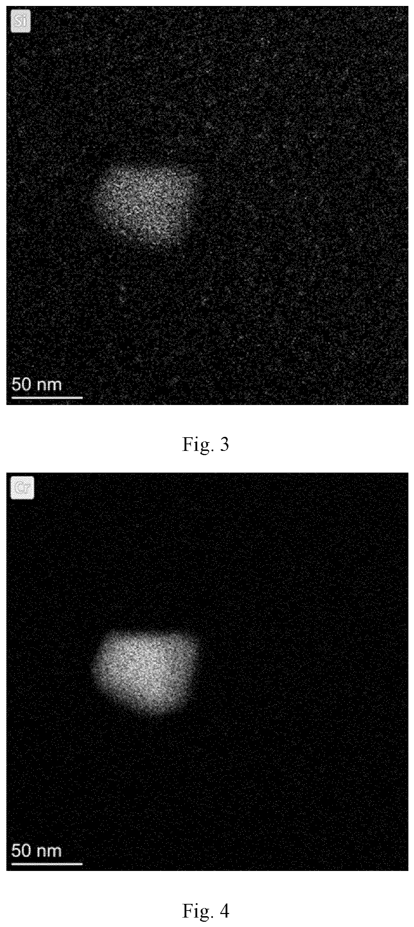

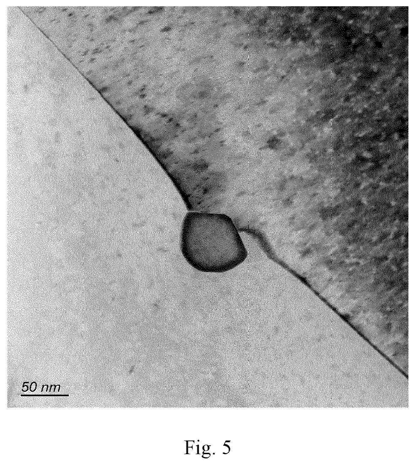

As shown in Figs. 1-5, Fig. 1 is a scanning electron microscope image of a copper alloy in the embodiment 1, Figs. 2-4 are element distribution diagrams of a copper alloy in the embodiment 1, and Fig. 5 is a transmission electron microscope image of a copper alloy in the embodiment 1. It can be clearly seen from the figure that the copper alloy prepared in embodiment 1 has precipitated phases of Cr3Si phase and NiSi phase, wherein the size of the Cr3Si phase is about 50nm, the size of the NiSi phase is about 5nm, and the NiSi phase is uniformly distributed in the copper alloy matrix.

The strip samples of the alloys in the 7 embodiments and the alloys in the 4 comparative embodiments are tested for mechanical properties, electrical conductivity, stress relaxation resistance and bending performance.

The room temperature tensile test is performed on an electronic universal tensile machine in accordance with ISO 6892-1 Metallic materials - Tensile testing - Part 1: Method of test at room temperature, using a bone specimen with an effective test width of 20 mm and a tensile speed of 5 mm/min.

The electrical conductivity test is performed in accordance with GB/T 32791 Electrical Conductivity (eddy-current) Test Method for electrical conductivity of copper and copper alloys, and the testing instrument is an eddy current metal electrical conductivity meter.

The stress relaxation resistance test is performed in accordance with GB/T0120-2013 Metallic materials-Tensile stress relaxation-Method of test, with samples taken parallel to the rolling direction, an initial loading stress of 80% of the 0.2% yield strength, a test temperature of 150°C, and a duration of 1000 hours.

The bending performance test is performed on a bending test machine in accordance with ISO 7438 Metallic materials - Bend test, with a sample width of 10 mm and a length of 50 mm.

The test results of the precipitated phase size and performance of each embodiment and comparative embodiment are shown in Table 2.

**Table 2 Test Results of Precipitated Phase Size and Performance of Embodiments and Comparative Embodiments**

| Serial Number | Size of NiSi Phase /nm | Size of Cr3Si Phase /nm | Performance | | | | | | |
|---|---|---|---|---|---|---|---|---|---|
| | | | Yield Strength /Mpa | Electrical conductivity /%IACS | Stress Relaxation Rate% | Bending 90°GW, R/t | Bending 90°BW, R/t | Bending 180°GW, R/t | Bending 180°BW, R/t |
| Embodiment 1 | 4.3 | 46 | 582 | 41.4 | 15 | 0.5 | 0.5 | 1.0 | 1.0 |
| Embodiment 2 | 5.7 | 52 | 598 | 40.6 | 17 | 1.0 | 1.0 | 1.5 | 1.5 |
| Embodiment 3 | 8.2 | 78 | 606 | 38.6 | 23 | 1.0 | 1.0 | 2.0 | 2.0 |
| Embodiment 4 | 6.6 | 63 | 623 | 40.9 | 19 | 1.0 | 1.0 | 1.5 | 1.5 |
| Embodiment 5 | 9.2 | 82 | 632 | 38.3 | 17 | 1.0 | 1.0 | 2.0 | 2.0 |
| Embodiment 6 | 7.6 | 86 | 644 | 43.3 | 18 | 0.5 | 0.5 | 1.0 | 1.5 |
| Embodiment 7 | 5.2 | 51 | 617 | 42.6 | 13 | 1.0 | 1.0 | 1.5 | 2.0 |
| Comparative Embodiment 1 | 21 | 125 | 573 | 30.2 | 29 | 1.5 | 1.5 | 2.0 | 2.5 |
| Comparative Embodiment 2 | 45 | 20 | 563 | 32.6 | 27 | 1.5 | 2.0 | 2.0 | 2.5 |
| Comparative Embodiment 3 | | | 603 | 16.3 | 51 | 1.0 | 2.0 | 2.0 | 2.0 |
| Comparative Embodiment 4 | | | 613 | 25.4 | 50 | 0 | 0.5 | 0.5 | 2.5 |

## Claims

1. A copper alloy, comprising the following components in percentages by weight: Cu: 85-92 wt.%, Ni: 0.5-1.5 wt.%, Si: 0.2-0.8 wt.%, Sn: 0.05-0.15 wt.%, Cr: 0.1-0.8 wt.%, Zr: 0.01-0.5 wt.%, Mg: 0.01-0.3 wt.% and the balance of Zn and inevitable impurities; and the copper alloy comprises NiSi phase and Cr3Si phase, wherein a size of the NiSi phase is ≤30nm, and a size of the Cr3Si phase is 40-100nm.

2. The copper alloy according to claim 1, wherein the NiSi phase and the copper alloy matrix are in a coherent relationship.

3. The copper alloy according to claim 2, wherein the components in percentages by weight of the copper alloy also comprises at least one element of Co, Fe, P, Re and Mn with a total amount not exceeding 2.0wt.%, wherein Co: 0.01%-1.0wt.%, Fe: 0.01%-1.0wt.%, P: 0.001%-0.05wt.%, Re: 0.0001%-0.05wt.%.

4. The copper alloy according to claim 3, wherein a strip made of the copper alloy has a yield strength of ≥550 MPa, an electrical conductivity of ≥35% IACS%, and a stress relaxation rate of no more than 25% after being kept at 150° C for 1000 hours.

5. The copper alloy according to claim 4, wherein a 90° bending workability of the strip made of the copper alloy is as follows: a value of R/t≤1 in the GW direction, and a value of R/t≤1 in the BW direction; and a 180° bending workability of the strip made of the copper alloy is as follows: a value of R/t≤2 in the GW direction, and a value of R/t≤2 in the BW direction.

6. The copper alloy according to claim 1, wherein the size of the NiSi phase is ≤10 nm.

7. The copper alloy according to claim 1, wherein the copper alloy is configured to manufacture a terminal of a connector.

8. A method for preparing the copper alloy according to any one of claims 1 to 7, comprising the following steps:
(1) Melting and Casting: maintaining melting temperature at 1200-1280°C, and casting temperature at 1180-1250°C;
(2) Preheating: preheating at 800-1050°C for 6-10h;
(3) Hot Rolling: controlling rolling reduction rate to be above 85%, while maintaining plate temperature above 800°C during the rolling process;
(4) Water Quenching: performing rapid inline water quenching with hot-rolled plate temperature above 800°C, cooling water temperature at 30-45°C, an inline water quenching speed of 30-50m/min, and a temperature difference between a head and tail of the plate before water quenching not exceeding 40°C;
(5) Milling Surface: milling 0.5-1.2mm from both top and bottom surfaces of the hot-rolled plate;
(6) Primary Cold Rolling: controlling the total reduction rate in cold rolling to be above 80%;
(7) Primary Aging: maintaining aging temperature at 350-480°C for 6-15 hours;
(8) Inline Solution Treatment: maintaining inline solution temperature at 800-950°C, and an inline solution speed of 10-60m/min;
(9) Secondary Cold Rolling: controlling the total reduction rate in cold rolling at 30-70%; and
(10) Secondary Aging: maintaining aging temperature at 400-550°C for 6-15 hours.

9. The method for preparing the copper alloy according to claim 8, wherein the smelting and casting method in step (1) is vertical casting or horizontal continuous casting.

10. The method for preparing the copper alloy according to claim 8, wherein Cr₃Si phase is precipitated after the primary aging, and NiSi phase is precipitated after the secondary aging.
